(19) **Europäisches Patentamt / European Patent Office / Office européen des brevets**

(11) **EP 4 583 191 A1**

(12) **EUROPEAN PATENT APPLICATION**
published in accordance with Art. 153(4) EPC

(43) Date of publication:
**09.07.2025 Bulletin 2025/28**

(21) Application number: **23859952.6**

(22) Date of filing: **02.08.2023**

(51) International Patent Classification (IPC):
$H01M\ 4/134^{(2010.01)}$    $H01M\ 4/133^{(2010.01)}$
$H01M\ 4/1393^{(2010.01)}$    $H01M\ 4/1395^{(2010.01)}$
$H01M\ 4/36^{(2006.01)}$    $H01M\ 4/38^{(2006.01)}$
$H01M\ 4/587^{(2010.01)}$    $H01M\ 4/62^{(2006.01)}$

(52) Cooperative Patent Classification (CPC):
H01M 4/133; H01M 4/134; H01M 4/1393;
H01M 4/1395; H01M 4/36; H01M 4/38;
H01M 4/587; H01M 4/62; Y02E 60/10

(86) International application number:
**PCT/JP2023/028248**

(87) International publication number:
**WO 2024/048183 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.08.2022 JP 2022136304**

(71) Applicant: **Panasonic Intellectual Property
Management Co., Ltd.
Kadoma-shi, Osaka 571-0057 (JP)**

(72) Inventors:
• **TANIGUCHI, Akihiro
 Kadoma-shi, Osaka 571-0057 (JP)**
• **INOUE, Kaoru
 Kadoma-shi, Osaka 571-0057 (JP)**

(74) Representative: **Novagraaf International SA
Chemin de l'Echo 3
1213 Onex, Geneva (CH)**

(54) **NEGATIVE ELECTRODE FOR SECONDARY BATTERIES, SECONDARY BATTERY, AND METHOD FOR PRODUCING NEGATIVE ELECTRODE FOR SECONDARY BATTERIES**

(57)    A negative electrode for secondary batteries according to one embodiment of the present disclosure is characterized by comprising a negative electrode current collector and a negative electrode mixture layer that is arranged on the negative electrode current collector, and is also characterized in that: the negative electrode mixture layer contains a binder and a negative electrode active material that contains a carbon material and an Si-based material; the pore size distribution of the negative electrode mixture layer as determined by a mercury intrusion method has two peak values R1 and R2; the peak value R1 is within the range of $0.5\ \mu m$ to $1.5\ \mu m$; the peak value R2 is within the range of $2\ \mu m$ to $10\ \mu m$; and the content of the binder contained in the negative electrode mixture layer is 4% by mass or more with respect to the total mass of the negative electrode active material.

EP 4 583 191 A1

## Description

TECHNICAL FIELD

The present disclosure relates to a negative electrode for secondary batteries, a secondary battery, and a method for producing a negative electrode for secondary batteries.

BACKGROUND

Si-based materials are currently attracting attention as materials capable of increasing battery capacity. Si-based materials are capable of electrochemically occluding and releasing lithium ions, and capable of charging and discharging with very large capacity, compared to carbon materials such as graphite.

For example, Patent Literature 1 discloses a negative electrode active material for lithium ion secondary batteries that contains a Si-based material represented by $SiO_x$ ($0 < x < 2$) and a carbon material, in which the negative electrode active material for lithium ion secondary batteries has internal voids.

For example, Patent Literature 2 discloses a method for producing a negative electrode for lithium ion secondary batteries that includes a current collector and a negative electrode active material layer stacked on the current collector, in which the negative electrode active material layer contains a silicon oxide (Si-based material) represented by $SiO_x$ ($0.3 \leq x \leq 1.6$) and a particulate conductor containing a metal element, and a surface portion located on the opposite side to the current collector in the negative electrode active material layer contains a larger amount of the conductor than a depth portion located on the current collector side in the negative electrode active material layer, and the method includes: a preparation step of preparing a negative electrode intermediate having the current collector, a negative electrode mixture layer stacked on the current collector and containing an acidic resin and a silicon oxide represented by $SiO_x$ ($0.3 \leq x \leq 1.6$), and a metal layer containing the metal element and stacked above the negative electrode mixture layer; a heating step of heating the negative electrode intermediate at a temperature at which at least a part of the acidic resin is decomposed; and a removal step of removing the metal layer after the heating step.

CITATION LIST

PATENT LITERATURE

Patent Literature 1: JP 2013-219059 A
Patent Literature 2: JP 5691867 B

SUMMARY

By the way, a Si-based material can increase the capacity of a secondary battery, but has a problem with swelling of a negative electrode, and is desired to be improved.

Therefore, an object of the present disclosure is to provide a negative electrode for secondary batteries capable of suppressing swelling of the negative electrode, a secondary battery, and a method for producing the negative electrode for secondary batteries.

A negative electrode for secondary batteries according to an aspect of the present disclosure includes a negative electrode current collector and a negative electrode mixture layer disposed on the negative electrode current collector, in which the negative electrode mixture layer includes a binder and a negative electrode active material containing a carbon material and a Si-based material, a pore size distribution of the negative electrode mixture layer as determined by a mercury intrusion method has two peak values R1 and R2, the peak value R1 is greater than or equal to 0.5 $\mu$m and less than or equal to 1.5 $\mu$m, the peak value R2 is greater than or equal to 2 $\mu$m and less than or equal to 10 $\mu$m, and a content of the binder contained in the negative electrode mixture layer is greater than or equal to 4 mass% with respect to a total mass of the negative electrode active material.

A secondary battery according to an aspect of the present disclosure includes the negative electrode for secondary batteries.

A method for producing a negative electrode for secondary batteries according to an aspect of the present disclosure includes: a first step of applying a negative electrode paste containing a negative electrode active material containing a carbon material and a Si-based material, a binder, and a pore-forming material to a negative electrode current collector to prepare a coating film, and then rolling the coating film; and a second step of decomposing and vaporizing the pore-forming material by subjecting the coating film to a heat treatment after the first step to form a negative electrode mixture layer, in which a pore size distribution of the negative electrode mixture layer as determined by a mercury intrusion method has two peak values R1 and R2, the peak value R1 is greater than or equal to 0.5 $\mu$m and less than or equal to 1.5 $\mu$m, the peak value R2 is greater than or equal to 2 $\mu$m and less than or equal to 10 $\mu$m, and a content of the binder contained in the negative electrode paste is greater than or equal to 4 mass% with respect to a total mass of the negative electrode active material.

According to the present disclosure, it is possible to provide a negative electrode for secondary batteries capable of suppressing swelling of the negative electrode, a secondary battery, and a method for producing the negative electrode for secondary batteries.

BRIEF DESCRIPTION OF DRAWINGS

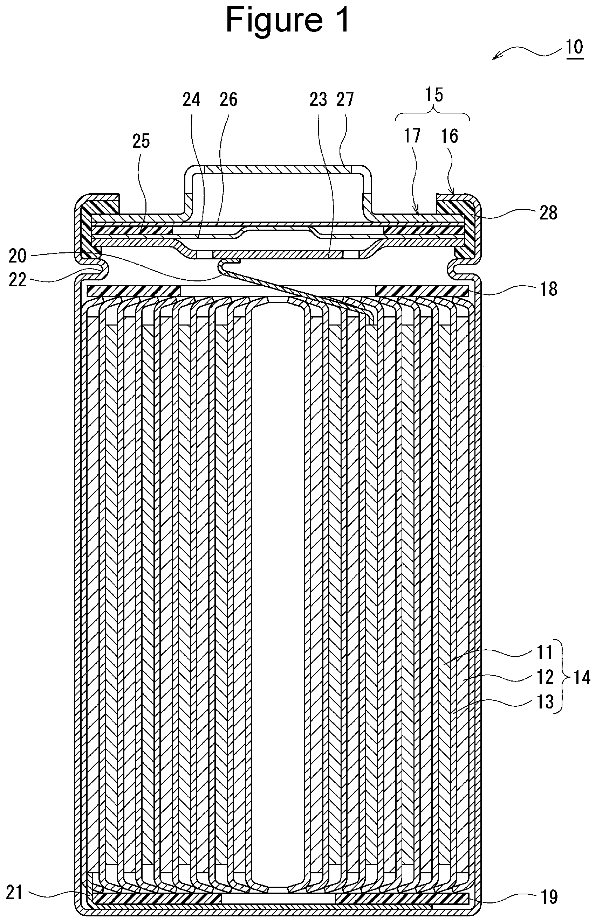

FIG. 1 is a sectional view of a secondary battery according to an example of an embodiment.

DESCRIPTION OF EMBODIMENTS

A negative electrode for secondary batteries according to an aspect of the present disclosure includes a negative electrode current collector and a negative electrode mixture layer disposed on the negative electrode current collector. The negative electrode mixture layer contains a binder and a negative electrode active material containing a carbon material and a Si-based material. A pore size distribution of the negative electrode mixture layer as determined by a mercury intrusion method has two peak values R1 and R2. The peak value R1 is greater than or equal to 0.5 $\mu$m and less than or equal to 1.5 $\mu$m, and the peak value R2 is greater than or equal to 2 $\mu$m and less than or equal to 10 $\mu$m. The content of the binder contained in the negative electrode mixture layer is greater than or equal to 4 mass% with respect to the total mass of the negative electrode active material. As in the present disclosure, it is presumed that since voids optimal for reducing expansion and shrinkage of the Si-based material due to charging and discharging are formed in the negative electrode mixture layer in which the two peak values (R1, R2) in the pore size distribution satisfy the above-described ranges, swelling of the negative electrode is suppressed. In addition, it is presumed that when the content of the binder satisfies the above-described range, the amount of the binder adhering to the Si-based material is sufficiently secured, so that the swelling of the negative electrode is further suppressed. As described later, in a case where the negative electrode for secondary batteries according to the present disclosure is produced, a pore-forming material is used, but the binder also adheres to the pore-forming material, and thus it is difficult to sufficiently secure the amount of the binder adhering to the Si-based material when the content of the binder is small. Since the pore-forming material is decomposed, vaporized, and lost by a heat treatment at the time of producing the negative electrode, it is presumed that the binder adhering to the pore-forming material is isolated and hardly acts on the suppression of the swelling of the negative electrode.

Hereinafter, embodiments of the negative electrode active material for secondary batteries and a secondary battery according to the present disclosure will be described in detail with reference to the drawing.

An example of a secondary battery according to an aspect of the present disclosure will be described below.

FIG. 1 is a sectional view of a secondary battery according to an example of an embodiment. The secondary battery 10 shown in FIG. 1 includes a wound electrode assembly 14 in which a positive electrode 11 and a negative electrode 12 are wound with a separator 13 interposed therebetween, a non-aqueous electrolyte, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Note that, instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, and the like, and resin cases (so-called laminated type) formed by laminating a resin sheet.

The non-aqueous electrolyte is, for example, an electrolyte having lithium ion conductivity, and may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. As in the present disclosure, in the negative electrode mixture layer in which the two peak values (R1, R2) in the pore size distribution satisfy the above-described ranges, voids optimal for improving the permeability of the electrolytic solution are formed, and therefore it is presumed that the swelling of the negative electrode is further suppressed by using the electrolytic solution. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as $LiPF_6$ is used.

As the solid electrolyte, for example, a solid or gel polymer electrolyte, an inorganic solid electrolyte, or the like can be used. As the inorganic solid electrolyte, a material known for all-solid-state lithium ion secondary batteries and the like (for example, an oxide-based solid electrolyte, a sulfide-based solid electrolyte, a halogen-based solid electrolyte, or the like) can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. The non-aqueous electrolyte is an example, and may be an aqueous electrolyte as long as it is applicable.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of a side portion of the case body 16 projects inward to support the sealing assembly 17. The projecting portion 22 is preferably formed in an annular shape along the circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are stacked sequentially from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus a current pathway between the lower vent member 24 and the upper vent member 26 is cut off. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to a bottom inner surface of the case body 16 by welding or the like, and the case body 16 serves as a negative electrode terminal.

The positive electrode 11, the negative electrode 12, and the separator 13 will be described below in detail.

[Positive Electrode]

The positive electrode 11 includes a positive electrode current collector and a positive electrode mixture layer disposed on the positive electrode current collector. The positive electrode current collector may be, for example, a foil of a metal, such as aluminum, that is stable in a potential range of the positive electrode 11, a film having the metal disposed on a surface layer thereof, and the like. The positive electrode mixture layer includes, for example, a positive electrode active material, a binder, a conductive agent, and the like. The positive electrode 11 can be produced, for example, by applying a positive electrode paste containing a positive electrode active material, a binder, a conductive agent, and the like to a surface of the positive electrode current collector, drying a coating film, and then rolling the coating film to form the positive electrode mixture layer on both surfaces of the positive electrode current collector.

Examples of the conductive agent contained in the positive electrode mixture layer include carbon materials such as carbon black, acetylene black, Ketjenblack, graphite, and carbon nanotubes. Examples of the binder contained in the positive electrode mixture layer include fluororesins such as polytetrafluoroethylene (PTFE) and polyvinylidene fluoride (PVdF), polyacrylonitrile (PAN), polyimide-based resins, acryl-based resins, polyolefin-based resins, styrene-butadiene rubber (SBR), cellulose derivatives of carboxymethyl cellulose (CMC) or a salt thereof, polyacrylic acid (PAA) or a salt thereof, polyethylene oxide (PEO), polyvinyl alcohol (PVA), and the like.

Examples of the positive electrode active material include a lithium transition metal composite oxide. Examples of a metal element contained in the lithium transition metal composite oxide include Ni, Co, Mn, Al, B, Mg, Ti, V, Cr, Fe, Cu, Zn, Ga, Sr, Zr, Nb, In, Sn, Ta, and W. Among them, it is preferable to contain at least one of Ni, Co, and Mn. A suitable example of the lithium transition metal composite oxide is a composite oxide represented by a general formula: $LiMO_2$ (where M is Ni and X, X is a metal element other than Ni, and the ratio of Ni is greater than or equal to 50 mol% and less than or equal to 95 mol% based on the total number of moles of the metal element except Li). Examples of X in the above formula include Co, Mn, Al, B, Mg, Ti, V, Cr, Fe, Cu, Zn, Ga, Sr, Zr, Nb, In, Sn, Ta, and W.

[Negative Electrode]

The negative electrode 12 includes a negative electrode current collector and a negative electrode mixture layer disposed on the negative electrode current collector. The negative electrode current collector may be, for example, a foil of a metal, such as copper, that is stable in a potential range of the negative electrode 12, a film having the metal disposed on a surface layer thereof, and the like. The negative electrode mixture layer contains a negative electrode active material and a binder, and may contain a conductive agent or the like. The negative electrode active material contains a carbon material and a Si-based material. The negative electrode active material may contain a material capable of reversibly occluding and releasing lithium ions in addition to the carbon material and the Si-based material. Examples of the conductive agent include those similar to those for the positive electrode 11.

The pore size distribution of the negative electrode mixture layer as determined by the mercury intrusion method has two peak values R1 and R2. The peak value R1 is greater than or equal to 0.5 $\mu$m and less than or equal to 1.5 $\mu$m, and the peak value R2 is greater than or equal to 2 $\mu$m and less than or equal to 10 $\mu$m.

In the mercury intrusion method, mercury is pressurized to infiltrate mercury into pores of a solid sample, and the diameter and volume of the pores are calculated from the pressure applied to the mercury and the amount of the mercury injected into the pores. When the mercury to which the pressure P is applied can enter the pores having the diameter D, the diameter D of the pores is determined from the pressure P, the contact angle $\theta$ of the mercury, and the surface tension $\sigma$ of the mercury according to the following equation. The volume of the pores is calculated from the amount of the mercury injected into the pores. In the present disclosure, a pore size is a diameter of pores.

$$-4\sigma\cos\theta = PD$$

The pore size distribution determined by the mercury intrusion method is a graph of log differential pore volume (cm$^3$/g) plotted against an average pore size ($\mu$m) in a section of each measurement point, where the horizontal axis is the pore size ($\mu$m) and the vertical axis is the log differential pore volume (cm$^3$/g). Here, in the present disclosure, each of the peak values in the pore size distribution means a pore size at a peak in the pore size distribution.

It suffices for the peak value R1 to be greater than or equal to 0.5 $\mu$m and less than or equal to 1.5 $\mu$m, and the peak value R1 is preferably, for example, greater than or equal to 0.8 $\mu$m and less than or equal to 1.2 $\mu$m. When the peak value R1 is less than 0.5 $\mu$m, many small voids are present between particles in the negative electrode mixture layer, so that the permeability of the electrolytic solution decreases, and it is not possible to increase the capacity of the secondary battery. When the peak value R1 is greater than 1.5 $\mu$m (less than 2 $\mu$m), the density of the negative electrode active material decreases, and it is not possible to increase the capacity of the secondary battery. It suffices for the peak value R2 to be greater than or equal to 2 $\mu$m and less than or equal to 10 $\mu$m, and the peak value R2 is preferably, for example, greater than or equal to 4 $\mu$m and less than or equal to 8 $\mu$m. When the peak value R2 is less than 2 $\mu$m, few voids are present in the negative electrode mixture layer and are capable of reducing expansion and shrinkage of the Si-based material during charging and discharging, so that the swelling of the negative electrode cannot be suppressed. When the peak value R2 is greater than or equal to 10 $\mu$m, many large voids are present in the negative electrode mixture layer, so that the density of the negative electrode active material decreases, and it is not possible to increase the capacity of the secondary battery.

The determination of the pore size distribution by the mercury intrusion method is performed on the negative electrode mixture layer before initial charging. For example, by using a measurement sample obtained by punching the negative electrode for secondary batteries into a predetermined shape before initial charging, the pore size distribution of the negative electrode mixture layer contained in the measurement sample can be determined by the mercury intrusion method. The measurement sample only needs to have at least the negative electrode mixture layer on its surface, and may have another configuration such as a negative electrode current collector.

The determination of the pore size distribution by the mercury intrusion method can be performed using, for example, an apparatus such as AutoPore IV 9500 series manufactured by Micromeltics. In the determination, the measurement sample is sealed in a sample container under an inert atmosphere, mercury is injected into the sample container, and pressure is applied to the mercury. Here, the pressure applied to the mercury is appropriately adjusted according to the pore size that the measurement sample can have, and is not particularly limited, but for example, measurement that is performed while the pressure is changed from 0.5 psi (3.4 kPa) to 60000 psi (413,400 kPa) is preferred in order to measure a wide range of pore size.

The Si-based material contained in the negative electrode active material is not particularly limited as long as it can reversibly occlude and release ions such as lithium ions, and examples of the Si-based material include Si particles, alloy particles containing Si, and Si compound particles. These may be used alone or in combination of two or more thereof.

The Si particles can be obtained, for example, using a gas phase method or by grinding silicon swarf finely, and whichever method is used for producing Si particles, the Si particles can be used. Examples of the alloy particles containing Si include alloys containing Si and a metal selected from alkali metals, alkaline earth metals, transition metals, rare earth metals, and combinations thereof. Examples of the Si compound particles include Si compound particles having a silicate phase and Si particles dispersed in the silicate phase, Si compound particles having a silicon oxide phase and Si particles dispersed in the silicon oxide phase, and Si compound particles having a carbon phase and Si particles dispersed in the carbon phase. Among them, Si compound particles having a silicate phase and Si particles dispersed in the silicate phase or Si compound particles having a carbon phase and Si particles dispersed in the carbon phase are preferable from the viewpoint of increasing the capacity of the secondary battery or suppressing degradation of charge-discharge cycle characteristics.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among the silicate phases, a silicate phase including lithium (hereinafter, sometimes referred to as lithium silicate phase) is preferable from the viewpoints of high lithium ion conductivity and the like.

The lithium silicate phase is represented by, for example, a formula: $Li_{2z}SiO_{2+z}$ ($0 < z < 2$). From the viewpoints of stability, ease of production, lithium ion conductivity, and the like, z preferably satisfies the relation of $0 < z < 1$, and more preferably $z = 1/2$.

The Si compound particles in which Si particles are dispersed in a silicon oxide phase is represented by, for example, a general formula $SiO_x$ (in which x is preferably in the range of $0 < x < 2$, and more preferably in the range of $0.5 \leq x \leq 1.6$). The Si compound particles in which Si particles are dispersed in a carbon phase are represented by, for example, a general formula SixC1y (in which x and y are preferably in the ranges of $0 < x \leq 1$ and $0 < y \leq 1$, and more preferably in the ranges of $0.3 \leq x \leq 0.45$ and $0.7 \leq y \leq 0.55$).

The Si-based material preferably has a particle surface on which a conductive film containing a material having high conductivity is formed. Examples of the conductive film include carbon films, metal films, and metal compound films, and a carbon film is preferable from the viewpoints of electrochemical stability and the like. The carbon film can be formed with, for example, a CVD method in which acetylene, methane, or the like is used, a method in which coal pitch, petroleum pitch, a phenol resin, or the like is mixed with a silicon-based active material and the mixture is heat-treated, or the like. The conductive film may also be formed by fixing a conductive filler such as carbon black to the particle surface of the Si-based material using a binder.

The content of the Si-based material is, for example, preferably greater than or equal to 30 mass% with respect to the total mass of the negative electrode active material from the viewpoint of, for example, increasing the capacity of the secondary battery. In addition, from the viewpoint of achieving a high capacity of the secondary battery and further suppressing swelling of the negative electrode, the content of the Si-based material is preferably greater than or equal to 30 mass% and less than or equal to 60 mass%, and more preferably greater than or equal to 35 mass% and less than or equal to 55 mass% with respect to the total mass of the negative electrode active material.

The average particle diameter of the Si-based material is preferably greater than or equal to 4 $\mu$m, for example, from the viewpoint of suppressing degradation of charge-discharge cycle characteristics due to a side reaction with the non-aqueous electrolyte. In addition, the average particle diameter of the Si-based material is, for example, preferably greater than or equal to 4 $\mu$m and less than or equal to 12 $\mu$m, and more preferably greater than or equal to 6 $\mu$m and less than or equal to 10 $\mu$m from the viewpoint of suppressing degradation of charge-discharge cycle characteristics and further suppressing swelling of the negative electrode.

Examples of the carbon material contained in the negative electrode active material include conventionally known carbon materials used as negative electrode active materials for secondary batteries, but graphite such as natural graphite such as scale-like graphite, massive graphite, and earth graphite, massive artificial graphite (MAG), and artificial graphite such as graphitized mesocarbon microbeads (MCMB) are preferable from the viewpoint of more suppressing degradation of charge-discharge cycle characteristics.

The average particle diameter of the carbon material is, for example, preferably greater than or equal to 10 $\mu$m and less than or equal to 25 $\mu$m, and more preferably greater than or equal to 12 $\mu$m and less than or equal to 20 $\mu$m from the viewpoint of further suppressing swelling of the negative electrode.

The average particle diameter of each material is a volume average particle diameter D50, which is 50% of the volume integrated value in a particle diameter distribution obtained by laser diffraction scattering.

The content of the carbon material is, for example, preferably greater than or equal to 40 mass% and less than or equal to 70 mass%, more preferably greater than or equal to 45 mass% and less than or equal to 65 mass% with respect to the total mass of the negative electrode active material.

As with the positive electrode 11, examples of the binder contained in the negative electrode mixture layer include fluororesins such as polytetrafluoroethylene (PTFE) and polyvinylidene fluoride (PVdF), polyacrylonitrile (PAN), polyimide-based resins, acryl-based resins, polyolefin-based resins, styrene-butadiene rubber (SBR), cellulose derivatives of carboxymethyl cellulose (CMC) or a salt thereof, polyacrylic acid (PAA) or a salt thereof, polyethylene oxide (PEO), polyvinyl alcohol (PVA), and the like. Among them, from the viewpoint of further suppressing the swelling of the negative electrode, the binder preferably contains at least one selected from the group consisting of styrene-butadiene rubber (SBR), carboxymethyl cellulose (CMC) or a salt thereof, and polyacrylic acid (PAA) or a salt thereof.

The content of the binder may be greater than or equal to 4 mass% with respect to the total mass of the negative electrode active material from the viewpoint of suppressing swelling of the negative electrode, but is preferably greater than or equal to 6 mass% with respect to the total mass of the negative electrode active material, and more preferably greater than or equal to 8 mass% with respect to the total mass of the negative electrode active material. The upper limit of the content of the binder may be, for example, less than or equal to 20 mass% or less than or equal to 15 mass% with respect to the total mass of the negative electrode active material from the viewpoint of the energy density of the battery.

An example of a method for producing the negative electrode 12 will be described. The negative electrode 12 includes: a first step of applying a negative electrode paste containing a negative electrode active material containing a carbon material and a Si-based material, a pore-forming material, and a binder to a negative electrode current collector to prepare a coating film, and then rolling the coating film; and a second step of decomposing and vaporizing the pore-forming material by subjecting the coating film to a heat treatment after the first step to form a negative electrode mixture layer.

By subjecting the coating film to the heat treatment to decompose and vaporize (for example, sublimate) the pore-forming material, and releasing the pore-forming material from within the coating film, not only small voids but also relatively large voids are formed between particles in the negative electrode mixture layer. As described above, when the negative electrode paste to which the pore-forming material is added is heat-treated, the pore distribution of the negative electrode mixture layer has a peak value R1 greater than or equal to 0.5 $\mu$m and less than or equal to 1.5 $\mu$m and a peak value R2 greater than or equal to 2 $\mu$m and less than or equal to 10 $\mu$m. On the other hand, when a negative electrode paste containing no pore-forming material is used, only small voids are formed between particles in an obtained negative electrode mixture layer. Therefore, when the negative electrode paste with no pore-forming material added is used, the pore distribution of the negative electrode mixture layer usually has only a peak value R1 greater than or equal to 0.5 $\mu$m and less than or equal to 1.5 $\mu$m.

The content of the binder contained in the negative electrode paste may be greater than or equal to 4 mass%, preferably greater than or equal to 6 mass%, and more preferably greater than or equal to 8 mass% with respect to the total mass of the negative electrode active material from the viewpoint of suppressing swelling of the negative electrode. The upper limit of the content of the binder contained in the negative electrode paste may be, for example, less than or equal to 20 mass%, or less than or equal to 15 mass%.

The heat treatment temperature is not particularly limited as long as it is a temperature at which the pore-forming material is decomposed and vaporized. The heat treatment time only needs to be sufficient to decompose and vaporize the pore-forming material in the coating film, and may be, for example, greater than or equal to 5 hours.

The pore-forming material may be any known material. Examples of the pore-forming material include metal oxalates, camphor, and naphthalene. Other examples of the pore-forming material include dicarboxylic acids such as fumaric acid, malonic acid, and malic acid. The average particle diameter of the pore-forming material is preferably, for example, greater than or equal to 2 $\mu$m and less than or equal to 10 $\mu$m. By setting the average particle diameter of the pore-forming material within the above-described range, the peak value R2 in the pore size distribution of the negative electrode mixture layer can be easily controlled to a range of greater than or equal to 2 $\mu$m and less than or equal to 10 $\mu$m. When a pore-forming material having an average particle diameter outside the above range is used, the peak values R2 and R1 in the pore size distribution of the negative electrode mixture layer can be controlled by adjusting the average particle diameter of each material used for the negative electrode active material, adjusting the viscosity of the negative electrode paste by adding a solvent or the like, adjusting the heat treatment time and temperature, and adjusting the linear pressure during the rolling of the coating film, and the like.

Examples of the mixing of raw materials such as the negative electrode active material, the pore-forming material, and the binder in obtaining the negative electrode paste include a cutter mill, a pin mill, a bead mill, a fine particle composing machine (device in which a shear force is generated between a rotor that has a special shape and rotates at high speed inside a tank and a collision plate), a granulator, a twin-screw extrusion kneader, and a kneader such as a planetary mixer.

The negative electrode paste is applied using, for example, a slit die coater, a reverse roll coater, a lip coater, a blade coater, a knife coater, a gravure coater, or a dip coater.

When the negative electrode paste is applied to the negative electrode current collector to obtain a coating film, the coating film is preferably heat-dried. The temperature for heat-drying is preferably a temperature at which the pore-forming material does not decompose or vaporize, but a part of the pore-forming material may decompose or vaporize during heat-drying.

The rolling of the coating film may be performed several times at a predetermined linear pressure, for example, with a roll press machine until the coating film has a predetermined thickness.

[Separator]

As the separator 13, for example, a porous sheet having an ion permeation property and an insulation property is used. Specific examples of the porous sheet include fine porous thin films, woven fabrics, and non-woven fabrics. As a material of the separator 13, polyolefin such as polyethylene and polypropylene, cellulose, and the like are suitable. The separator 13 may have a single-layered structure or a multilayered structure. On the surface of the separator, a heat-resistant layer or the like may be formed.

Example 1

Hereinafter, the present disclosure will be further described with reference to Examples. The present disclosure, however, is not limited to these Examples.

<Example 1>

[Production of Negative Electrode]

Graphite particles having an average particle diameter of 17 $\mu$m and a Si-based material having an average particle diameter of 8 $\mu$m and Si particles dispersed in a carbon phase were mixed at a mass ratio of 50 : 50. The mixture was used as a negative electrode active material. Then, 100 parts by mass of the negative electrode active material, 2 parts by mass of carboxymethyl cellulose (CMC) as a binder, 2 parts by mass of styrene-butadiene rubber (SBR) as a binder, 1 part by mass of multi-walled carbon nanotubes, and 12.5 parts by mass of fumaric acid (average particle diameter of 6 $\mu$m) were mixed, and the resulting mixture was mixed with arbitrary water to prepare a negative electrode paste. The negative electrode paste was applied to both surfaces of a negative electrode current collector made of a copper foil, and the coating film was dried and then rolled with a roller. Thereafter, the coating film was heat-treated at 200°C for 5 hours to produce a negative electrode in which a negative electrode mixture layer was formed on both surfaces of the negative electrode current collector.

Regarding the obtained negative electrode, the pore size distribution of the negative electrode mixture layer was determined by the mercury intrusion method and showed two peak values R1 and R2, where the peak value R1 was 1 $\mu$m and the peak value R2 was 6 $\mu$m.

[Production of Positive Electrode]

98 parts by mass of a lithium transition metal composite oxide represented by $LiCo_{1/3}Mn_{1/3}Ni_{1/3}O_2$, 1 part by mass of acetylene black, and 1 part by mass of polyvinylidene fluoride as a binder were mixed, and then N-methyl -2 pyrrolidone (NMP) was added to prepare a positive electrode paste. The negative electrode paste was applied to both surfaces of an aluminum foil, the coating film was dried and then rolled with a roller to produce a positive electrode in which a positive electrode mixture layer was formed on both surfaces of a positive electrode current collector.

[Preparation of Non-Aqueous Electrolyte]

In a mixed solvent obtained by mixing ethylene carbonate (EC) and ethyl methyl carbonate (EMC) at a mass ratio of 1 : 3, $LiPF_6$ was dissolved at a concentration of 1 mol/L to prepare a non-aqueous electrolytic solution.

[Production of Test Cell]

The positive electrode and the negative electrode were stacked so as to face each other with a polyolefin separator interposed therebetween, and the resulting product was wound to produce an electrode assembly. Next, the electrode assembly was housed in a bottomed cylindrical battery case body, the non-aqueous electrolytic solution was injected, and then an opening of the battery case body was sealed with a gasket and a sealing assembly to produce a test cell.

<Example 2>

A test cell was prepared in the same manner as in Example 1 except that the amount of carboxymethyl cellulose (CMC) was changed to 4 parts by mass and the amount of styrene-butadiene rubber (SBR) was changed to 4 parts by mass in preparation of the negative electrode. In the negative electrode of Example 2, the pore size distribution of the negative electrode mixture layer was determined by the mercury intrusion method and showed two peak values R1 and R2, where the peak value R1 was 1 $\mu$m and the peak value R2 was 6 $\mu$m.

<Example 3>

A test cell was prepared in the same manner as in Example 1 except that the amount of carboxymethyl cellulose (CMC) was changed to 5 parts by mass and the amount of styrene-butadiene rubber (SBR) was changed to 5 parts by mass in preparation of the negative electrode. In the negative electrode of Example 3, the pore size distribution of the negative electrode mixture layer was determined by the mercury intrusion method and showed two peak values R1 and R2, where the peak value R1 was 1 μm and the peak value R2 was 6 μm.

<Comparative Example 1>

A test cell was prepared in the same manner as in Example 1 except that the amount of carboxymethyl cellulose (CMC) was changed to 1.5 parts by mass and the amount of styrene-butadiene rubber (SBR) was changed to 1.5 parts by mass in preparation of the negative electrode. In the negative electrode of Comparative Example 1, the pore size distribution of the negative electrode mixture layer was determined by the mercury intrusion method and showed two peak values R1 and R2, where the peak value R1 was 1 μm and the peak value R2 was 6 μm.

<Comparative Example 2>

A test cell was prepared in the same manner as in Example 1 except that the amount of carboxymethyl cellulose (CMC) was changed to 0.5 parts by mass and the amount of styrene-butadiene rubber (SBR) was changed to 0.5 parts by mass in preparation of the negative electrode. In the negative electrode of Comparative Example 2, the pore size distribution of the negative electrode mixture layer was determined by the mercury intrusion method and showed two peak values R1 and R2, where the peak value R1 was 1 μm and the peak value R2 was 6 μm.

<Comparative Example 3>

A test cell was prepared in the same manner as in Example 1 except that fumaric acid having an average particle diameter of 1 μm was used in preparation of the negative electrode. In the negative electrode of Comparative Example 3, the pore size distribution of the negative electrode mixture layer was determined by the mercury intrusion method and showed one peak value R1, where the peak value R1 was 1 μm.

[Evaluation of Swelling Rate of Negative Electrode]

The test cell in each of Examples and Comparative Examples was charged at a constant current of 1/3 C under a temperature environment of 25°C until the battery voltage reached 4.2 V, and then charged at a constant voltage of 4.2 V until the current value reached 0.05 C. The test cell after the charging was disassembled, the negative electrode was taken out, and the thickness of the negative electrode after the charging was measured with a micro gauge. Then, the swelling rate of the negative electrode was calculated by the following equation, and the results are summarized in Table 1.

The swelling rate of the negative electrode (%) = (the thickness of the negative electrode after the charging/the thickness of the negative electrode at the time of production of the negative electrode) × 100

[Table 1]

|  | R1 | R2 | Particle diameter of fumaric acid | Content of binder | Swelling rate of negative electrode |
|---|---|---|---|---|---|
| Unit | μm | μm | μm | weight% | % |
| Example 1 | 1 | 6 | 6 | 4 | 122 |
| Example 2 | 1 | 6 | 6 | 8 | 120 |
| Example 3 | 1 | 6 | 6 | 10 | 120 |
| Comparative Example 1 | 1 | 6 | 6 | 3 | 125 |
| Comparative Example 2 | 1 | 6 | 6 | 1 | 130 |
| Comparative Example 3 | 1 | - | 1 | 4 | 143 |

As shown in Table 1, in all of Examples 1 to 3, the swelling rate of the negative electrode was less than 125%. On the other hand, in Comparative Examples 1 to 3, the swelling rate of the negative electrode was greater than or equal to 125%. That is, regarding the negative electrode mixture layer containing the negative electrode active material containing the carbon material and the Si-based material and the binder, the pore size distribution as determined by the mercury intrusion method has the two peak values R1 and R2, the peak value R1 is greater than or equal to 0.5 $\mu$m and less than or equal to 1.5 $\mu$m, the peak value R2 is greater than or equal to 2 $\mu$m and less than or equal to 10 $\mu$m, and the content of the binder is greater than or equal to 4 mass% with respect to the total mass of the negative electrode active material. Therefore, the swelling of the negative electrode can be suppressed.

[Supplementary Notes]

(1) A negative electrode for secondary batteries, including

a negative electrode current collector and a negative electrode mixture layer disposed on the negative electrode current collector, in which
the negative electrode mixture layer includes a binder and a negative electrode active material containing a carbon material and a Si-based material,
a pore size distribution of the negative electrode mixture layer as determined by a mercury intrusion method has two peak values R1 and R2,
the peak value R1 is greater than or equal to 0.5 $\mu$m and less than or equal to 1.5 $\mu$m, the peak value R2 is greater than or equal to 2 $\mu$m and less than or equal to 10 $\mu$m, and
a content of the binder contained in the negative electrode mixture layer is greater than or equal to 4 mass% with respect to a total mass of the negative electrode active material.

(2) The negative electrode for secondary batteries according to (1), in which the Si-based material has an average particle diameter greater than or equal to 4 $\mu$m.
(3) The negative electrode for secondary batteries according to (1) or (2), in which a content of the Si-based material is greater than or equal to 30 mass% with respect to the total mass of the negative electrode active material.
(4) The negative electrode for secondary batteries according to any one of (1) to (3), in which the Si-based material contains a Si compound having a silicate phase and Si particles dispersed in the silicate phase.
(5) The negative electrode for secondary batteries according to any one of (1) to (4), in which the Si-based material contains a Si compound having a carbon phase and Si particles dispersed in the carbon phase.
(6) The negative electrode for secondary batteries according to any one of (1) to (5), in which a content of the Si-based material is greater than or equal to 30 mass% and less than or equal to 60 mass% with respect to the total mass of the negative electrode active material.
(7) The negative electrode for secondary batteries according to any one of (1) to (6), in which the Si-based material has an average particle diameter greater than or equal to 4 $\mu$m and less than or equal to 12 $\mu$m.
(8) The negative electrode for secondary batteries according to any one of (1) to (7), in which the carbon material contains graphite.
(9) The negative electrode for secondary batteries according to any one of (1) to (8), in which the carbon material has an average particle diameter greater than or equal to 10 $\mu$m and less than or equal to 25 $\mu$m.
(10) A secondary battery including the negative electrode for secondary batteries according to any one of (1) to (9).
(11) A method for producing a negative electrode for secondary batteries, the method including

a first step of applying a negative electrode paste containing a negative electrode active material containing a carbon material and a Si-based material, a binder, and a pore-forming material to a negative electrode current collector to prepare a coating film, and then rolling the coating film; and
a second step of decomposing and vaporizing the pore-forming material by subjecting the coating film to a heat treatment after the first step to form a negative electrode mixture layer, in which
a pore size distribution of the negative electrode mixture layer as determined by a mercury intrusion method has two peak values R1 and R2,
the peak value R1 is greater than or equal to 0.5 $\mu$m and less than or equal to 1.5 $\mu$m, the peak value R2 is greater than or equal to 2 $\mu$m and less than or equal to 10 $\mu$m, and
a content of the binder contained in the negative electrode paste is greater than or equal to 4 mass% with respect to a total mass of the negative electrode active material.

REFERENCE SIGNS LIST

| | |
|---|---|
| 10 | Secondary battery |
| 11 | Positive electrode |
| 12 | Negative electrode |
| 13 | Separator |
| 14 | Electrode assembly |
| 15 | Battery case |
| 16 | Case body |
| 17 | Sealing assembly |
| 18 | Insulating plate |
| 18, 19 | Insulating plate |
| 20 | Positive electrode lead |
| 21 | Negative electrode lead |
| 22 | Projecting portion |
| 23 | Filter |
| 24 | Lower vent member |
| 25 | Insulating member |
| 26 | Upper vent member |
| 27 | Cap |
| 28 | Gasket |

**Claims**

1. A negative electrode for secondary batteries, comprising:

   a negative electrode current collector; and a negative electrode mixture layer disposed on the negative electrode current collector, wherein
   the negative electrode mixture layer includes a binder and a negative electrode active material containing a carbon material and a Si-based material,
   a pore size distribution of the negative electrode mixture layer as determined by a mercury intrusion method has two peak values R1 and R2,
   the peak value R1 is greater than or equal to 0.5 $\mu$m and less than or equal to 1.5 $\mu$m, the peak value R2 is greater than or equal to 2 $\mu$m and less than or equal to 10 $\mu$m, and
   a content of the binder contained in the negative electrode mixture layer is greater than or equal to 4 mass% with respect to a total mass of the negative electrode active material.

2. The negative electrode for secondary batteries according to claim 1, wherein the Si-based material has an average particle diameter greater than or equal to 4 $\mu$m.

3. The negative electrode for secondary batteries according to claim 1 or 2, wherein a content of the Si-based material is greater than or equal to 30 mass% with respect to the total mass of the negative electrode active material.

4. The negative electrode for secondary batteries according to claim 1 or 2, wherein the Si-based material contains a Si compound having a silicate phase and Si particles dispersed in the silicate phase.

5. The negative electrode for secondary batteries according to claim 1 or 2, wherein the Si-based material contains a Si compound having a carbon phase and Si particles dispersed in the carbon phase.

6. The negative electrode for secondary batteries according to claim 1 or 2, wherein a content of the Si-based material is greater than or equal to 30 mass% and less than or equal to 60 mass% with respect to the total mass of the negative electrode active material.

7. The negative electrode for secondary batteries according to claim 1 or 2, wherein the Si-based material has an average particle diameter greater than or equal to 4 $\mu$m and less than or equal to 12 $\mu$m.

8. The negative electrode for secondary batteries according to claim 1 or 2, wherein the carbon material contains graphite.

9. The negative electrode for secondary batteries according to claim 1 or 2, wherein the carbon material has an average particle diameter greater than or equal to 10 $\mu$m and less than or equal to 25 $\mu$m.

10. A secondary battery comprising the negative electrode for secondary batteries according to claim 1 or 2.

11. A method for producing a negative electrode for secondary batteries, the method comprising:

a first step of applying a negative electrode paste containing a negative electrode active material containing a carbon material and a Si-based material, a binder, and a pore-forming material to a negative electrode current collector to prepare a coating film, and then rolling the coating film; and

a second step of decomposing and vaporizing the pore-forming material by subjecting the coating film to a heat treatment after the first step to form a negative electrode mixture layer, wherein

a pore size distribution of the negative electrode mixture layer as determined by a mercury intrusion method has two peak values R1 and R2,

the peak value R1 is greater than or equal to 0.5 $\mu$m and less than or equal to 1.5 $\mu$m, the peak value R2 is greater than or equal to 2 $\mu$m and less than or equal to 10 $\mu$m, and

a content of the binder contained in the negative electrode paste is greater than or equal to 4 mass% with respect to a total mass of the negative electrode active material.

# Figure 1

## INTERNATIONAL SEARCH REPORT

| International application No. |
|---|
| **PCT/JP2023/028248** |

### A. CLASSIFICATION OF SUBJECT MATTER

*H01M 4/134*(2010.01)i; *H01M 4/133*(2010.01)i; *H01M 4/1393*(2010.01)i; *H01M 4/1395*(2010.01)i; *H01M 4/36*(2006.01)i; *H01M 4/38*(2006.01)i; *H01M 4/587*(2010.01)i; *H01M 4/62*(2006.01)i

FI:  H01M4/134; H01M4/133; H01M4/36 E; H01M4/38 Z; H01M4/587; H01M4/62 Z; H01M4/36 A; H01M4/1395; H01M4/1393

According to International Patent Classification (IPC) or to both national classification and IPC

### B. FIELDS SEARCHED

Minimum documentation searched (classification system followed by classification symbols)

H01M4/134; H01M4/133; H01M4/1393; H01M4/1395; H01M4/36; H01M4/38; H01M4/587; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2009-252580 A (SONY CORP.) 29 October 2009 (2009-10-29) | 1 |
| | paragraphs [0007], [0009], [0013], [0022]-[0037], [0055]-[0072], [0186], [0200], table 2 | |
| Y | | 2-11 |
| Y | WO 2020/195334 A1 (PANASONIC INTELLECTUAL PROPERTY MANAGEMENT CO., LTD.) 01 October 2020 (2020-10-01) paragraphs [0026]-[0053] | 2-10 |
| Y | WO 2020/250468 A1 (PANASONIC INTELLECTUAL PROPERTY MANAGEMENT CO., LTD.) 17 December 2020 (2020-12-17) paragraphs [0034], [0053] | 11 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **04 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/028248**

| Patent document cited in search report | | | Publication date (day/month/year) | Patent family member(s) | | | Publication date (day/month/year) |
|---|---|---|---|---|---|---|---|
| JP | 2009-252580 | A | 29 October 2009 | US 2009/0253033 A1 paragraphs [0009], [0011], [0015], [0043]-[0058], [0076]-[0093], [0201], [0214], table 2 CN 101557008 A KR 10-2015-0124435 A | | | |
| WO | 2020/195334 | A1 | 01 October 2020 | US 2022/0190328 A1 paragraphs [0026]-[0064] CN 113557615 A | | | |
| WO | 2020/250468 | A1 | 17 December 2020 | US 2021/0343997 A1 paragraphs [0047], [0067] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013219059 A
- JP 5691867 B